Europäisches Patentamt

European Patent Office

Office européen des brevets

(11) Publication number: **0 406 940 A2**

# EUROPEAN PATENT APPLICATION

(21) Application number: 90201683.1

(22) Date of filing: 26.06.90

(51) Int. Cl.5 **A23D 9/00, A23L 1/308**

(30) Priority: 30.06.89 EP 89201748

(43) Date of publication of application:
09.01.91 Bulletin 91/02

(84) Designated Contracting States:
AT BE CH DE DK ES FR GB GR IT LI NL SE

(71) Applicant: UNILEVER NV
Burgemeester s'Jacobplein 1 P.O. Box 760
NL-3000 DK Rotterdam(NL)
(84) BE

Applicant: UNILEVER PLC
Unilever House Blackfriars P.O. Box 68
London EC4P 4BQ(GB)
(84) GB

(72) Inventor: de Boer, Bernardus Cornelis Joseph
Unilever Research Lab., Olivier van
Noortlaan 120
NL-3133 AT Vlaardingen(NL)
Inventor: Kivits, Gerardus Adrianus Antonius
Unilever Research Lab., Olivier van
Noortlaan 120
NL-3133 AT Vlaardingen(NL)

(74) Representative: Mulder, Cornelis Willem
Reinier, Dr. et al
UNILEVER N.V. Patent Division P.O. Box 137
NL-3130 AC Vlaardingen(NL)

(54) Edible fat-containing products containing ester derivatives of vitamin E.

(57) The present invention pertains to edible fat-containing food products comprising an indigestible fat-replacer and a vitamin E derivative selected on the basis of reduced hydrophobicity as expressed by its Retention Value. Having a Retention Value of 7 or more, the vitamin E derivatives of the invention are less sensitive to depletory effects by the indigestible fat-replacer.

# EDIBLE FAT-CONTAINING PRODUCTS CONTAINING ESTER DERIVATIVES OF VITAMIN E

The present invention relates to edible fat-containing products comprising an indigestible fat-replacer and an ester derivative of vitamin E.

In this specification, unless otherwise indicated, the term 'fat' refers to edible fatty substances in a general sense, including natural or synthesized fats and oils consisting essentially of triglycerides such as, for example, soybean oil, sunflower oil, palm oil, coconut oil, fish oil, lard and tallow, which may have been partially or completely hydrogenated or modified otherwise, as well as non-toxic fatty materials having properties similar to triglycerides, herein referred to as fat-replacers, which materials may be partially or fully indigestible. The terms fat and oil are used interchangeably.

Over the last decade many non-triglyceride fatty substances have been described as potential fat-replacers in food products. Examples thereof are waxes, e.g. jojoba oil and hydrogenated jojoba oil, polysiloxanes, acylated glycerides, polyalkoxyglycerolethers, dicarboxylic acid esters, polyol fatty acid polyesters and the epoxy extended derivatives thereof. Examples of disclosures of fat-replacers are e.g. DD 207 070, Journal of Food Science 49 , 419-428 (1984), US 3,600,186, US 4,005,195, US 4,005,196, US 4,034,083, US 4,582,715, US 4,582,927, EP 0 233 856, EP 0 236 288, EP 0 235 836 and EP 0 254 547.

In particular polyol fatty acid polyesters, and more specifically the sugar fatty acid polyesters, such as e.g. the sucrose fatty acid polyesters, are receiving increased attention as low-calorie fat-replacers in edible products. Substantially indigestible for human beings they have physical and organoleptic properties very similar to triglyceride oils and fats conventionally used in edible products.

Polyol fatty acid polyesters are also reported to have use as pharmaceutical agents e.g. in view of their ability to take up fat-soluble substances, such as in particular cholesterol, in the gastro-intestinal tract, and subsequently remove those substances from the human body.

In US 4,005,196 and US 4,034,083 indigestible sucrose fatty acid polyesters in the diet are reported to interfere with the absorption of the fat-soluble vitamins A, D, E and K. It is taught to overcome possible vitamin mal-absorption effects by fortifying the sucrose fatty acid polyester containing food compositions with fat-soluble vitamins.

An important fat-soluble vitamin occurring in many vegetable oils such as in particular, corn, cottonseed, peanut, safflower, sunflower, soybean and wheat germ oils, is vitamin E. Vitamin E is the collective name for a group of eight compounds all having to some extent the biological activity which is characteristic to vitamin E. Four members of this group are formed by the tocopherols, i.e. alpha-, beta, gamma-and delta-tocopherol, differing from each other only with respect to the methyl position on the benzene ring. Each of the tocopherols have a number of stereomers in view of the presence of three asymmetric carbon atoms. Further members of the group of vitamin E compounds are formed by the tocotrienols, which are similar to the corresponding tocopherols but with unsaturated side chains. The most abundant and, in terms of vitamin E activity most potent, member of the vitamin E compounds is alpha-tocopherol. In this specification the term vitamin E is intended to collectively refer to the above group of compounds having the biological activity characteristic for vitamin E.

Although no fixed minimum daily requirements of vitamin E can easily be given, recommended dietary allowances for adults in most countries are in the range of 10 to 15 mg per day.

Substitution of conventional absorbable fat or oil components in food products by an indigestible fat-replacer results in a reduction of the vitamin E absorption which is not only due to the interference by the indigestible fat-replacer with the absorption of vitamin E as supplied by various food sources, but also due to a reduction of the vitamin E supply itself in the food resulting from substitution of e.g. vegetable oils by fat-replacers which do not contain vitamin E.

Although vitamin fortification in the sense of adding levels of vitamins which are higher than those present in the conventional product, is described to avoid any depletion problems, in many countries public opinion or legal restrictions resist high added levels of food additives, such as also vitamins. Accordingly, it is attractive to be able to supplement vitamin E to food products containing indigestible fat-replacers at levels as low as possible and preferably similar to the levels in natural food products or components.

It has now been found that the degree to which indigestible fat-replacers, such as polyol fatty acid polyesters, interfere with the absorption of vitamin E, is strongly dependent upon the chemical form of the vitamin E used. The form in which vitamin E is present in conventional fat-containing food products is either as one or more of the in nature occurring compounds of the vitamin E group or as the commercially readily available and very stable acetic acid ester of vitamin E, in particular α-tocopheryl acetate. According to the present findings the interference by the indigestible fat-replacers is significantly reduced when instead of the acetic acid ester of vitamin E, fat-soluble derivatives of vitamin E, in particular fat-soluble ester derivatives of vitamin E, are used having a reduced hydrophobicity compared to vitamin E acetate.

Surprisingly, it is found that vitamin E in this less hydrophobic form although still essentially water-insoluble at the relevant pH-range, apparently is easier removed from the indigestible fat-replacer phase in the gut to such extent that interference by the indigestible fat-replacer does not or to a much lesser extent occurs. The selection of the appropriate ester derivatives of vitamin E in accordance with the present invention therefore allows lower levels of vitamin E suppletion in food products containing indigestible fat-replacers.

In particular, it has been found that a very convenient way to select ester derivatives of vitamin E having suitable hydrohpobicities is to use a HPLC test method (which is described hereunder in more detail) providing a quick means for determining suitability for application in the present invention. The position of the particular vitamin E ester derivative in the HPLC-chromatogram under certain specific chromatographic conditions determines suitable hydrophobicity of the vitamin E ester.

Accordingly, in its broadest aspects the present invention provides edible fat- containing products comprising an indigestible fat-replacer and an ester derivative of vitamin E having a Retention Value (defined hereunder) of 7 or more.

In a more specific aspect the present invention provides edible fat-containing products comprising an indigestible fat-replacer and an ester derivative of vitamin E, said ester being derived from an acid selected from the group of organic and inorganic acids which in addition to the ester-forming acid group comprise one or more functional groups selected from carboxyl, hydroxyl, alkoxyl, polyalkyleneoxide, halo- and alkoxycarbonyl, amino and amido groups.

The indigestible fat-replacer may be any indigestible fatty material which in physical properties and rheology behaves similar to conventional triglyceride oils and fats. Suitable examples thereof have been given hereinbefore.

In this specification by 'indigestible' is meant that about 70 % by weight or more of the material concerned is not digested by the human body.

A preferred class of indigestible fat-replacers for inclusion in the edible fat-containing products of the invention are the polyol fatty acid polyesters.

Suitable polyol fatty acid polyesters are derived from aliphatic or aromatic polyols which comprise at least four free hydroxyl groups. Such polyols in particular include the group of sugar polyols, which comprises the sugars, i.e. the mono-, di- and polysaccharides, the corresponding sugar alcohols and the derivatives thereof having at least four free hydroxyl groups. Examples of sugar polyols include glucose, mannose, galactose, xylose, fructose, sorbose, tagatose, ribulose, xylulose, maltose, lactose, cellobiose, raffinose, sucrose, erythritol, mannitol, lactitol, sorbitol, xylitol and alphamethylglucoside. A particularly preferred polyol is sucrose.

The term 'polyol fatty acid polyester' is intended to refer to any such polyesters or mixtures thereof which have a degree of conversion of 70 % or more, i.e. of which, on an average, 70 % or more of the polyol hydroxyl groups have been esterified with fatty acids. Preferred polyol fatty acid polyesters for use in the present invention have degrees of conversion of 85 % or more, or even 95 % or more.

The fatty acid residues in the polyol fatty acid polyesters may be derived from naturally occurring or synthetic fatty acids per se, or suitable sources thereof, such as natural triglyceride fats and oils or their corresponding lower-alkyl esters. The fatty acids may be saturated or unsaturated, branched or straight fatty acids containing from 8 to 24 carbon atoms, in particular 12 to 18 carbon atoms, such as lauric, myristic, palmitic, stearic, oleic, elaidic, and linoleic acids. Suitable natural sources are the vegetable oils, such as sunflower, safflower, rapeseed, palm kernel, palm and soybean oils. If so required, conventional techniques may be used to first introduce the necessary degree of saturation. Suitable such techniques include full or partial hydrogenation, interesterification, and fractionation, and may be used before or after conversion to the polyol fatty acid polyesters.

The fat component in the compositions of the invention may consist solely of a single indigestible fat-replacer, but may also be a mixture of different indigestible fat-replacers or a mixture of indigestible fat-replacers and conventional triglyceride fats. Generally, at least 10 % by weight of the fat component of the edible compositions will consist of indigestible fat-replacer. However, in view of calorie reduction it is preferred that of from 50 % up to 90 or even 100 % of the fat component consists of the indigestible fat-replacer.

The optional conventional fat-component may be triglyceride oils or fats of animal or vegetable origin. Suitable conventional triglyceride fats and oils include, optionally partially or fully hydrogenated, coconut oil, palmkernel oil, palm oil, marine oils, lard, tallow fat, butter fat, cocoa butter fat, soybean oil, safflower oil, cotton seed oil, rapeseed oil, corn oil sunflower oil and mixtures thereof.

In terms of rheology the selection of the appropriate fat-replacer or mixture of fat-replacer and conventional fat strongly depends upon the particular application envisaged, and may range of fat-replacers having a fully fluid rheology to replace liquid oils in e.g. salad, frying or seasoning oils, to more viscous or even solid rheology in compositions having a more structured fat phase such as margarines, spreads, shortenings and confectionery products.

The required rheology and melting behaviour may be optimised to specific applications both by selection of an appropriate blend of fatty acids and/or selection of an appropriate blend of fat-replacers with different rheologies. If significant amounts of indigestible liquid fat-replacers are included it is often advantageous also to include certain amounts of hard-stock fatty material, either conventional solid fats or solid fat-replacer, and/or dietary fibre materials, to avoid too strong laxative or even anal-leakage effects.

The essential feature of the present invention is the inclusion of an ester derivative of vitamin E. Suitable such ester derivatives are characterised by a hydrophobicity which is lower than the hydrophobicity of the conventional vitamin E acetate ester.

For the purposes of this invention suitable hydrophobicities can be expressed by way of a HPLC retention value as measured by a high performance liquid chromatography (HPLC) test method. The Retention Value (RV) is defined as

$RV = 100 * (1/R_t)$,

in which $R_t$ is the retention time expressed in minutes, as determined by a reversed phase HPLC-chromatogram (20°C, flow rate: 1.5 ml/min, detection wave length: 285 nm) using as stationary phase a Nucleosil® column (type 5C18 / ET 250/8/4) ex Machery Nagel, Germany and as eluent a methanol:water:tetrahydrofuran:acetic acid mixture in a ratio by volume of 960:40:15:1.

Suitable ester derivatives of vitamin E in accordance with the present invention have Retention Values of 7 or more, and in particular 7 to 50. Reduced hydrophobicity must be such that the vitamin E ester derivative is not too hydrophylic. Good results have been obtained with derivatives characterized by a Retention Value of 10 to 40, derivatives having Retention Values of 10 to 20, or even 10.5 to 15, being preferred.

Within the constraints of the above defined Retention Values suitable vitamin E derivatives are vitamin E esters derived from organic and inorganic ester-forming acids which in addition to the ester-forming acid group comprise one or more functional groups selected from the group of carboxyl, hydroxyl, alkoxyl, polyalkyleneoxide, halo- and alkoxycarbonyl, amino and amido groups.

As stated hereinbefore vitamin E may be any of the group of compounds having the characteristic biological vitamin E activity, i.e. both of the tocopherol and the tocotrienol type. In view of the stronger biological vitamin E activity preferably the vitamin E esters in accordance with the invention are esters of the tocopherol members of the vitamin E compounds, alpha-tocopherol being preferred most.

Suitable ester-forming organic acids in accordance with the present invention are found among the hydroxy acids, the polycarboxylic acids, the polyhydroxycarboxylic acids, the aminocarboxylic and -sulphonic acids, the glycerophosphoric acids, the phosphatidic acids and the choline phosphoric acid esters. Examples of such acids are glycolic acid, lactic acid, succinic acid, tauro- and glycosuccinic acid, tartaric acid, apple acid, citric acid, citromalic acid, hydroxyglutamic acid, gluconic acid, hydroxymalonic acid, ascorbic acid, glycine, lysine, serine, betaine, alanine, hydroxylysine, valine, asparagine, taurine, glycerophosphoric acid, phosphorylcholine, the group of cholic acids, such as chenodeoxycholic acid and cholic acid, and the polyhydroxycarboxylic acid esters, such as glycero-, erythrito-and polyo-succinic acids.

Suitable ester-forming inorganic acids are found among the carbonic, zulphonic and phosphoric acids and the alkali metal salts thereof, such as sodium bicarbonate and biphosphate.

Particularly preferred vitamin E derivatives in accordance with the invention are tocopheryl acid succinate, tocopheryl ascorbate, tocopheryl acid hydroxymalonate, tocopheryl acid taurosuccinate and tocopheryl glycerosuccinate. Of these d-α-tocopheryl acid succinate and d-α-tocopheryl glycerosuccinate are preferred most.

In general the vitamin E ester may be included in the composition of the present invention in amounts ranging from 1 to 3000 micrograms per gram of the overall fat component in the product, and in particular, the vitamin E ester is included in an amount of 1 to 1000 micrograms per gram. Preferred amounts lie within the range of from 100 to 800 micrograms per gram of fat component, and in many instances amounts of between 200 and 600 micrograms of vitamin E ester per gram of the overall fat component are sufficient to ensure no or negligible depletion effects.

The present invention is not specific to edible fat-containing compositions in any particular food area. It may be suitably be applied to food products such as spreads, margarines, creams, salad oils, frying oils, shortenings, bakery products such as doughs, cakes and biscuits, fried and snack products, fresh, hard and processed cheeses, meat emulsions, mayonnaise and dressings, confectionery products, such as desserts, fillings, chocolates, candies, chews, and ice-creams.

4

To illustrate the invention there were carried out a series of comparative experiments to show the effect of polyol fatty acid polyester fat-replacer on the biological availability of vitamin E. The experiments involved 4 weeks' feeding trials of groups of 8 rats in which serum vitamin E levels were determined after 0, 2 and 4 weeks, and liver vitamin E status after 4 weeks. Diets (Table 4A) with and without fat-replacer (two types of sucrose fatty acid polyester) were compared using two ester derivatives of vitamin E in amounts of 20 IU/1000 Kcal (1 IU is the biological activity corresponding to 1 mg dl-α-tocopheryl acetate): α-tocopheryl acetate (RV = 5.7) and α-tocopheryl acid succinate (RV - 11.0).

The results are presented in Tables 1 and 2 and clearly show the advantageous effects of the succinate form over the acetate form .

TABLE 1

| Serum levels of vitamin E in microgram/ml | | | | | | |
|---|---|---|---|---|---|---|
| | tocopheryl acetate | | | tocopheryl acid succinate | | |
| | 0 | 2 | 4 | 0 | 2 | 4 |
| fat-component in diet | weeks | | | weeks | | |
| lard/sunflower oil only<br>+ liquid SPE-1 (*)<br>+ solid SPE-2 (**) | 12.8<br>14.9<br>14.3 | 19.4<br>6.3<br>6.5 | 20.1<br>5.1<br>5.3 | 13.4<br>14.1<br>14.3 | 17.9<br>14.3<br>14.1 | 17.8<br>13.4<br>13.3 |

(*) SPE-1 - sucrose fatty acid polyester (degree of conversion above 95 %) in which the fatty acid residues are derived from touch-hardened soybean oil (IV = 107).
(**) SPE-2 - sucrose fatty acid polyester (degree of conversion above 95 %) in which the fatty acid residues are derived from a mixture of fully hardened and touch-hardened soybean oil (IV = 50).

TABLE 2

| liver vitamin E status after 4 weeks in microgram.g of liver tissue | | |
|---|---|---|
| | tocopheryl acetate | tocopheryl acid succinate |
| fat-component in diet | 4 weeks | 4 weeks |
| lard/sunflower oil only<br>+ liquid SPE-1 (*)<br>+ solid SPE-2 (**) | 41.0<br>7.2<br>7.9 | 29.9<br>18.8<br>18.3 |

(*) SPE-1 - sucrose fatty acid polyester (degree of conversion above 95 %) in which the fatty acid residues are derived from touch-hardened soybean oil (IV = 107).
(**) SPE-2 - sucrose fatty acid polyester (degree of conversion above 95 %) in which the fatty acid residues are derived from a mixture of fully hardened and touch-hardened soybean oil (IV = 50).

In a further experiment rat feeding trials were carried out to test the bioavailability of naturally present vitamin E combined with various vitamin E ester derivatives in the presence of liquid sucrose fatty acid polyester (type SPE-1 as defined above). Groups of 8 rats each were fed a diet (Table 4B) containing natural sources of vitamin E (corresponding to about 10 mg/1000 Kcal d-α-tocopherol and about 10 mg/1000 Kcal d-γ-tocopherol) for a period of three weeks. Four different vitamin E ester derivatives were supplemented to this diet in an amount corresponding to 1 mg tocopherol equivalent, i.e. having an activity equal to 1 mg of RSR-α-tocopherol, and vitamin E liver status was measured after three weeks. Results are presented in Table 3 and clearly show the advantageous effects on vitamin E depletion of the less hydrophobic vitamin E ester derivatives.

TABLE 3

| Liver vitamin E status after 3 weeks in microgram/g of liver tissue | | | |
|---|---|---|---|
| diet | supplement | RV | liver status |
| no SPE-1 | none | - | 41.0 |
| + SPE-1 | none | - | 12.9 |
| + SPE-1 | d-α-tocopheryl acetate | 5.7 | 18.7 |
| + SPE-1 | d-α-tocopheryl acid succinate | 11.0 | 27.1 |
| + SPE-1 | d-α-tocopheryl glycerosuccinate | 12.1 | 32.3 |
| + SPE-1 | d-α-tocopheryl taurosuccinate | 51.5 | 21.0 |

TABLE 4

| Basic diets used in the feeding trials expressed in g/1000 Kcal | | |
|---|---|---|
| ingredients | diet A | diet B |
| Ca-caseinate | 60.7 | 60.7 |
| mineral mixture (Table 5) | 3.6 | 3.6 |
| vitamin mix (Table 6) | 1.0 | 1.0 |
| sunflower oil | 4.3 | - |
| sunflower oil (low linoleic acid) | - | 10.8 |
| lard | 17.2 | 10.8 |
| soybean oil | - | 10.8 |
| maize starch | 162.9 | 134.3 |
| Solkafloc UF-900® (fibre) | - | 15.0 |
| SPE-1 (optional) | 30.0 | 10.8 |
| SPE-2 (optional) | 30.0 | - |

6

TABLE 5

| composition of mineral mixture used in diets | |
|---|---|
| ingredients | mg/1000 Kcal |
| potassium chloride | 350 |
| sec. magnesium phosphate | 956 |
| prim. potassium phosphate | 475 |
| potassium bicarbonate | 719 |
| calcium carbonate | 295 |
| trisodium 2 hydrate | 711 |
| magnesium sulphate | 51.4 |
| ferric (III) citrate | 43.9 |
| copper citrate | 4.7 |
| zinc citrate | 12.5 |
| potassium iodate | 0.07 |

TABLE 6

| composition of vitamin mixture used in diets | |
|---|---|
| ingredients | mg/1000 Kcal |
| choline chloride (50 %) | 500 |
| myo-inositol | 25.0 |
| calcium silicate | 50.0 |
| calcium pantothenic acid | 5.0 |
| niacin | 5.0 |
| biotin | 0.05 |
| vitamin A (325 IU/mg) | 7.7 |
| vitamin B-1 | 1.5 |
| vitamin B-2 | 1.5 |
| vitamin B-6 | 0.5 |
| vitamin B-12 (1000 mg/kg) | 5.0 |
| vitamin D-3 (80 IU/mg) | 3.1 |
| vitamin K-3 (22.7 %) | 1.0 |
| folic acid | 0.25 |
| sucrose | 394.5 |

**Claims**

1. Edible fat-containing product comprising an indigestible fat-replacer and an ester derivative of vitamin E, characterised in that the ester derivative of vitamin E has a Retention Value of 7 or more.

2. Product according to claim 1 in which the ester derivative of vitamin E has a Retention Value of 10 to 40.

3. Product according to claim 2 in which the ester derivative of vitamin E has a Retention value of 10 to 20.

4. Product according to any one of the preceding claims in which the ester derivative of vitamin E is derived from an acid selected from the group of organic and inorganic acids which in addition to the ester-forming acid group comprise one or more functional groups selected from carboxyl, hydroxyl, alkoxyl, polyalkyleneoxide, halo- and alkoxycarbonyl, amino and amido groups.

5. Product according to claim 4 in which the ester-forming organic acid is selected from the group consisting of the hydroxy acids, the polycarboxylic acids, the polyhydroxycarboxylic acids, the aminocarboxylic and -sulphonic acids, the glycerophosphoric acids, the phosphatidic acids and the choline phosphoric acid esters.

6. Product according to claim 5 in which the ester derivative of vitamin E is selected from the group of tocopheryl acid succinate, tocopheryl ascorbate, tocopheryl acid hydroxymalonate, tocopheryl acid taurosuccinate and tocopheryl glycerosuccinate.

7. Product according to any one of the preceding claims in which the indigestible fat-replacer is a polyol fatty acid polyester derived from a polyol selected from the group of sugar polyols having at least four free hydroxyl groups, and in which the fatty acid residues contain from 8 to 24 carbon atoms.

8. Product according to claim 7 in which the polyol fatty acid polyester is derived from sucrose and has a degree of conversion of 85 % or more.

9. Product according to any one of the preceding claims in which from 50 % up to 90 of the fat component consists of the indigestible fat-replacer.

10. Product according to any one of the preceding claims in which the ester derivative of vitamin E is included in an amount of 1 to 1000 micrograms per gram of the overall fat component in the product.